# EUROPEAN PATENT APPLICATION

(11) **EP 1 113 193 A2**
(43) Date of publication of application: **04.07.2001**
(21) Application number: 00127707.8
(22) Date of filing: 18.12.2000
(51) Int. Cl.: F16H 57/08

(54) **Aircraft gear transmission**

(30) Priority: 21.12.1999 IT TO991131
(71) Applicant: FIATAVIO S.p.A., 10127 Torino (IT)
(72) Inventor: Altamura, Paolo, 70043 Monopoli (IT); Andrei, Gianluca, 10126 Torino (IT)
(74) Representative: Franzolin, Luigi

(57) **Abstract**

An aircraft gear transmission (1) having an input shaft (10); an output shaft (11); a first torque dividing stage (29) located in series with the input shaft (10) and dividing the torque (Ci) from the input shaft (10) into at least two separate torque portions (Ce, Cf) traveling along respective transmission paths; and two second torque dividing stages (30, 31), which are associated with respective transmission paths, are located in series with the first stage (29), and each divide the relative torque portion (Ce, Cf) from the first stage (29) into separate fractions (Cn) traveling along respective branches of the relative transmission path.

## Description

The present invention relates to an aircraft gear transmission.

In aircraft, and particularly aircraft engines, power is transmitted from an input shaft to an output shaft - connectable to a power unit and propeller respectively - by a number of gears, the in-service stress condition of which is not generally known for certain, so the gears must be designed to withstand maximum possible load values, thus resulting in bulk, increased weight and relatively high cost.

It is an object of the present invention to provide an aircraft gear transmission, which is straightforward and cheap to produce, highly reliable, compact and lightweight.

According to the present invention, there is provided an aircraft gear transmission comprising an input shaft and an output shaft rotating about respective axes, and power transmission means interposed between said input shaft and said output shaft; characterized in that said power transmission means comprise a first torque dividing stage located in series with said input shaft and dividing the torque from the input shaft into at least two separate torque portions traveling along respective transmission paths; and two second torque dividing stages, which are associated with respective said transmission paths, are located in series with said first stage, and each divide the relative said torque portion from the first stage into separate fractions traveling along respective branches of the relative said transmission path.

A preferred, non-limiting embodiment of the present invention will be described by way of example with reference to the accompanying drawings, in which:
Figure 1 shows a section of an aircraft gear transmission in accordance with the present invention;

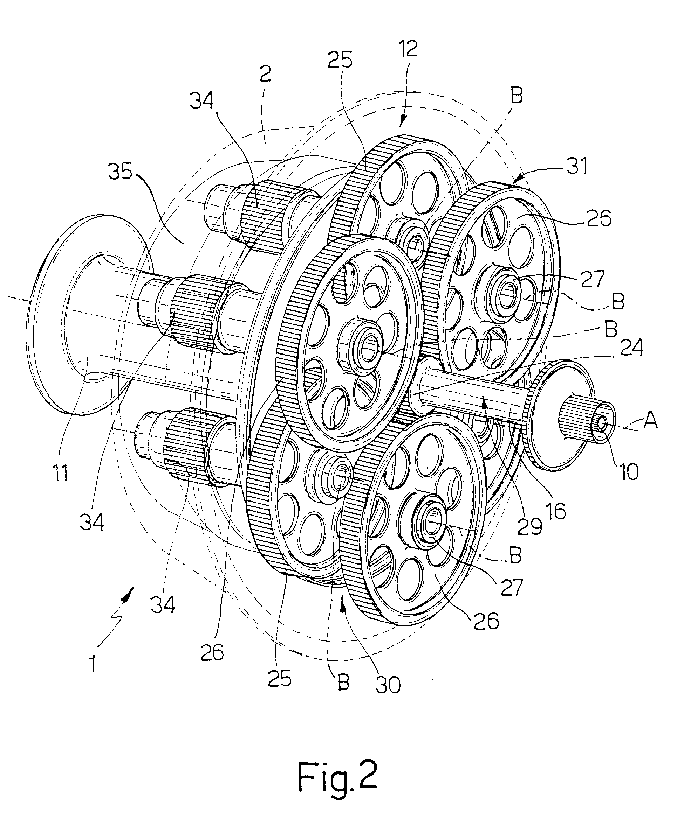

Figure 2 shows a view in perspective, with parts removed for clarity, of the Figure 1 transmission.

Number 1 in the accompanying drawings indicates as a whole an aircraft gear transmission, particularly for an aircraft engine.

Transmission 1 may be interposed between a power unit (not shown) and a user device (not shown) - in the example shown, a propeller.

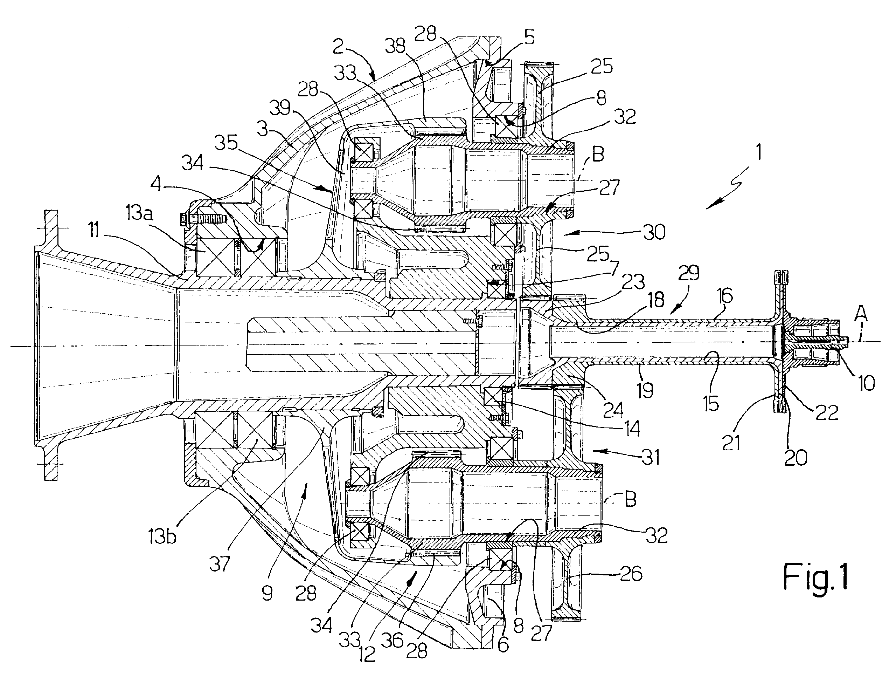

With particular reference to Figure 1, transmission 1 comprises a fixed outer supporting case 2 having an axis A and in turn comprising a hollow, bell-shaped body 3 defining opposite circular end openings 4, 5 of axis A and increasing in diameter from opening 4, and a diskshaped cover 6 fixed to body 3 to close opening 5.

Cover 6 comprises a circular central through opening 7 of axis A; and six circular peripheral through openings 8 having respective axes B parallel to axis A and equally spaced angularly about opening 7.

Internally, case 2 defines a chamber 9 of axis A communicating externally through opening 4 on one side, and through openings 7 and 8 on the other.

Transmission 1 also comprises an input shaft 10 of axis A, located outside case 2 and connectable to the power unit; an output shaft 11 fitted through openings 4 and 7 in case 2 and connectable to the propeller; and an epicyclic power transmission assembly 12 interposed between input and output shafts 10 and 11 and housed partly inside case 2.

More specifically, input shaft 10 is supported, in known manner not shown, by said power unit to rotate in axially-fixed manner about axis A; and output shaft 11 is connected to case 2, so as to rotate in axially-fixed manner about axis A, by respective bearings 13a, 13b and 14, two (13a, 13b) of which are engaged inside opening 4, and one (14) inside opening 7.

Assembly 12 comprises two hollow auxiliary shafts 15, 16, which are coaxial with axis A, are fitted with a certain amount of radial clearance one (15) inside the other (16), are fixed to an end flange 22 of input shaft 10 solely by respective adjacent end flanges 20, 21, and have respective floating opposite free end portions 18, 19.

Auxiliary shafts 15, 16 are of predetermined, advantageously the same, torsional rigidity K1, K2 to transmit a torque Ci from the power unit to input shaft 10.

Auxiliary shafts 15, 16 define a first torque dividing stage 29 for dividing torque Ci from input shaft 10 into two torque portions Ce, Cf traveling along separate transmission paths within assembly 12. Since auxiliary shafts 15, 16 have the same torsional rigidity K1, K2, the torque portions Ce, Cf transmitted by auxiliary shafts 15, 16 in steady operating conditions are necessarily the same.

Assembly 12 comprises two sun gears 23, 24 formed integrally on respective end portions 18, 19 of auxiliary shafts 15, 16 and located side by side along axis A; a number of first planet gears 25 equally spaced angularly about axis A and meshing with sun gear 23; and a number of second planet gears 26 equally spaced angularly with respect to one another and to planet gears 25 about axis A, and meshing with sun gear 24.

Planet gears 25 and 26 lie respectively in separate parallel first and second planes perpendicular to axis A.

Planet gears 25, 26 are fitted to respective pins 27 fitted coaxially through respective openings 8 in cover 6 with the interposition of respective pairs of bearings 28, so that each pin 27 rotates about axis B of respective opening 8 and is supported in axially-fixed manner by case 2.

Sun gears 23, 24 and respective planet gears 25, 26 define two identical second torque dividing stages 30, 31 located parallel to each other and in series with first stage 29, and relative to respective auxiliary shafts 15, 16. Each second stage 30, 31 divides the respective torque portion Ce, Cf from first stage 29 into separate fractions Cn traveling along three branches of the respective transmission path through respective planet gears 25, 26.

Advantageously, each auxiliary shaft 15, 16 is supported radially at respective sun gear 23, 24 solely by respective planet gears 25, 26, with respect to which it is therefore self-centering so as to divide the respective torque portion Ce, Cf transmitted to planet gears 25, 26 into equal fractions Cn.

More specifically, each pin 27 comprises an end portion 32 projecting outwards of case 2 and fitted with respective planet gear 25, 26; and an opposite end portion 33 housed inside case 2 and defining integral external teeth 34.

Assembly 12 also comprises a substantially bell-shaped ring gear 35 extending inside case 2, fitted to output shaft 11, and having internal teeth 36 meshing with teeth 34 of pins 27 so as to combine the torque fractions Cn of respective planet wheels 25, 26 prior to transmission to output shaft 11.

More specifically, in axial section, ring gear 35 is substantially C-shaped, and comprises a substantially cylindrical attachment portion 37 engaged rigidly by output shaft 11; a substantially cylindrical meshing portion 38 larger in diameter than attachment portion 37 and having internal teeth 36 close to the free end; and a substantially dome-shaped connecting portion 39 connecting portions 37 and 38.

More specifically, meshing portion 38 projects axially with respect to attachment portion 37, and is supported radially by teeth 34 of pins 27.

The particular bell shape allows ring gear 35 a certain degree of flexibility with respect to axis A so as to minimize any load-induced misalignment of the various component parts of transmission 1.

In actual use, when the power unit is activated, a torque Ci is transmitted from input shaft 10 to auxiliary shafts 15, 16, which, having the same torsional rigidity K1, K2, twist and transmit, in steady operating conditions, respective equal torque portions Ce, Cf to respective sun gears 23, 24.

At first stage 29, therefore, torque Ci undergoes a first division into two portions Ce, Cf, which travel through assembly 12 along respective transmission paths defined by auxiliary shafts 15, 16 and respective sun gears 23, 24.

Each torque portion Ce, Cf is then transmitted by the respective sun gear 23, 24 to the planet gears 25, 26 with which the sun gear meshes. Since the auxiliary shafts 15, 16 are supported radially by connection to input shaft 10 at end flanges 20, 21, and directly by respective planet gears 25, 26 at opposite end portions 18, 19, each sun gear 23, 24 is free, in use, to adjust the position of its axis so as to center itself automatically with respect to planet gears 25, 26, so that the torque portion Ce, Cf transmitted by each sun gear 23, 24 is divided into equal fractions Cn among planet gears 25, 26.

At each second stage 30, 31, therefore, the respective torque portion Ce, Cf is further divided into three fractions Cn, which travel through assembly 12 along respective branches of the relative transmission path defined by respective planet gears 25, 26.

Once rotated, planet gears 25, 26 rotate respective integral pins 27, so that torque fractions Cn are combined on ring gear 35 and, via the ring gear, on output shaft 11 by teeth 34 meshing with the inner teeth 36 of ring gear 35.

The advantages of transmission 1 according to the present invention will be clear from the foregoing description.

In particular, the design of transmission 1 provides for effecting a double division of the torque Ci transmitted from input shaft 10 to output shaft 11, thus optimizing the loads on gears 23, 24, 25, 26 forming transmission 1, which is therefore extremely compact, lightweight and cheap to produce.

More specifically, the fact that the magnitude of torque portions Ce, Cf into which torque Ci is divided depends solely on the elastic characteristics of auxiliary shafts 15, 16, the stress to which sun gears 23, 24 are subjected can be determined exactly, and the sun gears therefore sized accordingly.

Similarly, since gun gears 23, 24 are self-centering with respect to respective planet gears 25, 26, the stress on the planet gears can also be determined beforehand, and, in the example described, equals a third of the torque portion Ce, Cf transmitted by the relative sun gear 23, 24.

As such, gears 23, 24, 25, 26 of transmission 1 can all be sized on the basis of minimum in-service stress resistance requirements, with no need for oversizing due to uncertainty as to the actual stress to which transmission 1 is subjected.

Clearly, changes may be made to transmission 1 as described and illustrated herein without, however, departing from the scope of the accompanying Claims.

In particular, planet gears 25, 26 may also revolve about relative sun gears 23, 24; and meshing portion 38 of ring gear 35 may be radially inner with respect to planet gears 25, 26, so as to mesh with planet gears 25, 26 by means of external teeth.

Finally, planet gears 25 and 26 may mesh directly with a common ring gear, which may be either angularly movable, and hence connected angularly to output shaft 11, or fixed; in which latter case, the output power would be picked up by a carrier supporting planet gears 25 and 26.

## Claims

1. An aircraft gear transmission (1) comprising an input shaft (10) and an output shaft (11) rotating about respective axes (A), and power transmission means (12) interposed between said input shaft and said output shaft (10, 11); characterized in that said power transmission means (12) comprise a first torque dividing stage (29) located in series with said input shaft (10) and dividing the torque (Ci) from the input shaft (10) into at least two separate torque portions (Ce, Cf) traveling along respective transmission paths; and two second torque dividing stages (30, 31), which are associated with respective said transmission paths, are located in series with said first stage (29), and each divide the relative said torque portion (Ce, Cf) from the first stage (29) into separate fractions (Cn) traveling along respective branches of the relative said transmission path.

2. A transmission as claimed in Claim 1, characterized in that said second stages (30, 31) are identical.

3. A transmission as claimed in Claim 1 or 2, characterized in that said torque portions (Ce, Cf) are equal.

4. A transmission as claimed in any one of the foregoing Claims, characterized in that said fractions (Cn) of each said torque portion (Ce, Cf) are equal.

5. A transmission as claimed in any one of the foregoing Claims, characterized in that said second stages (30, 31) respectively comprise a first and a second sun gear (23, 24), through each of which travels a respective torque portion (Ce, Cf); a number of first planet gears (25) arranged angularly about said first sun gear (23) and meshing with the first sun gear (23); and a number of second planet gears (26) arranged angularly about said second sun gear (24) and meshing with the second sun gear (24).

6. A transmission as claimed in Claim 5, characterized in that said first planet gears (25) and said second planet gears (26) lie in a first plane and a separate parallel second plane respectively.

7. A transmission as claimed in Claim 5 or 6, characterized in that said first and second planet gears (25, 26) are equally spaced angularly about the axis (A) of the respective said first and second sun gear (23, 24).

8. A transmission as claimed in any one of Claims 5 to 7, characterized in that said second stages (30, 31) comprise three said first planet gears (25) and three said second planet gears (26) respectively; each said torque portion (Ce, Cf) being divided by the relative said second stage (30, 31) into three equal said fractions (Cn).

9. A transmission as claimed in any one of Claims 5 to 8, characterized in that said first stage (29) comprises a first and a second auxiliary shaft (15, 16) having first end portions (20, 21) fixed to said input shaft (10), and floating opposite second end portions (18, 19) respectively carrying said first and said second sun gear (23, 24) and supported radially by the relative said first and second planet gears (25, 26).

10. A transmission as claimed in Claim 9, characterized in that said first and said second auxiliary shaft (15, 16) are coaxial, are fitted with a certain amount of radial clearance one inside the other, and have respective predetermined torsional rigidities (K1, K2) lower than the torsional rigidity required to transmit the whole torque (Ci) received from the input shaft (10).

11. A transmission as claimed in Claim 10, characterized in that said torsional rigidities (K1, K2) of said first and said second auxiliary shaft (15, 16) are equal.

12. A transmission as claimed in any one of Claims 5 to 11, characterized by comprising a supporting structure (2); and in that said first and second planet gears (25, 26) are mounted to said supporting structure (2) so as to rotate in axially-fixed manner about their respective axes (B).

13. A transmission as claimed in any one of Claims 5 to 12, characterized in that said power transmission means comprise a ring gear (35) angularly integral with said output shaft (11) and meshing with said first and second planet gears (25, 26).

14. A transmission as claimed in Claim 13, characterized in that said ring gear (35) comprises an attachment portion (37) angularly integral with said output shaft (11); and a meshing portion (38), which has teeth (36) meshing with said first and second planet gears (25, 26), projects with respect to said attachment portion (37) along the axis of said output shaft (11), and is supported radially by respective pins (27) supporting said first and second planet gears (25, 26).
